# EUROPÄISCHE PATENTSCHRIFT

(11) **EP 2 888 093 B1**
(45) Veröffentlichungstag und Bekanntmachung des Hinweises auf die Patenterteilung: **04.09.2019**
(21) Anmeldenummer: 13742423.0
(22) Anmeldetag: 23.07.2013
(51) Int. Cl.: B29C 55/06, B32B 27/08

(54) **FOLIENPRODUKT**
FILM PRODUCT
PRODUIT SOUS FORME DE FILM

(30) Priorität: 22.08.2012 DE 102012107753
(43) Veröffentlichungstag der Anmeldung: 01.07.2015
(73) Patentinhaber: Windmöller & Hölscher KG, 49525 Lengerich/Westf. (DE)
(72) Erfinder: LINKIES, Jürgen, 49536 Lienen (DE)
(86) Internationale Anmeldenummer: PCT/EP2013/065483
(87) Internationale Veröffentlichungsnummer: WO 2014/029572

(56) Entgegenhaltungen:
- EP-A1- 1 232 846
- EP-A2- 0 249 073
- EP-A2- 0 707 938
- EP-A2- 0 918 362
- EP-A2- 1 426 164
- US-A1- 2005 202 198

## Beschreibung

Die vorliegende Anmeldung betrifft ein Folienprodukt und ein Verfahren zur Herstellung eines Folienprodukts.

Verfahren für das Recken von Folienprodukten sowie entsprechende Verfahren für die Herstellung solcher Folienprodukte und derartige Folienprodukte selbst, sind grundsätzlich bekannt. Sie werden z. B. eingesetzt, um Kunststofffolienprodukte längs zu recken und damit die Stabilität dieser Folienprodukte zu erhöhen. Ein solches Längsreckverfahren wird üblicherweise mit zumindest zwei nacheinander folgenden Walzenpaaren durchgeführt. Dabei sind ein erstes Walzenpaar zur Förderung des Folienproduktes und ein zweites, nachfolgendes Walzenpaar zur weiteren Förderung des Folienproduktes angeordnet. Das zweite Walzenpaar weist dabei eine höhere Umdrehungszahl als das erste Walzenpaar auf, so dass das Folienprodukt von dem ersten Nachteilhaft bei bekannten Verfahren und bei bekannten Folienprodukten ist es, dass durch das Längsrecken ein sogenanntes Neck-In erzeugt wird, also ein Einschnüren des Folienproduktes quer zur Reckrichtung. Dieser Neck-In kann sich auch auf den Hauptabschnitt des Folienproduktes auswirken, sodass auf diese Weise die Qualität des gereckten Folienproduktes reduziert oder sogar Ausschuss erzeugt wird. Um dieser Problematik zu begegnen, wurde bei bekannten Reckverfahren ein aktives Halten der Ränder des Folienproduktes durchgeführt. So ist es bekannt, dass mit klammerartigen Mitteln an den Walzenpaaren die Ränder der Folie festgehalten werden. Dies erfordert jedoch einen sehr hohen konstruktiven Aufwand, welcher darüber hinaus hinsichtlich des Einsatzes eine hohe Fehleranfälligkeit aufweist.

Es ist Aufgabe der vorliegenden Erfindung, die voranstehend beschriebenen Nachteile zumindest teilweise zu beheben. Insbesondere ist es Aufgabe der vorliegenden Erfindung, ein Folienprodukt und ein Verfahren für die Herstellung eines Folienprodukts zur Verfügung zu stellen, welche mit besonders wenig Aufwand und vor allem kostengünstig und einfach die Gefahr des Einschnürens quer zur Reckrichtung reduzieren.

Die Schrift EP 1 426 164 A2 offenbart ein Verfahren zur Bildung einer Harzfolie. Hierzu werden mit einem Extrudierwerkzeug verbundene Harze extrudiert, um die Folie zu erhalten.

Die Schrift EP 0707938 A2 offenbart ein Verfahren zur Erzeugung eines thermoplastischen Films.

Die Schrift EP 0 249 073 A2 offenbart ein Folienprodukt mit beschichteten Randabschnitten.

Die Schrift EP 1 232 846 A1 offenbart ein Folienprodukt mit Randabschnitten einer bestimmten Viskosität.

Die voranstehende Aufgabe wird gelöst durch ein Folienprodukt mit den Merkmalen des Anspruchs 1 und durch ein Herstellverfahren mit den Merkmalen des Anspruchs 7. Weitere Merkmale und Details der Erfindung ergeben sich aus den Unteransprüchen, der Beschreibung und den Zeichnungen. Dabei gelten Merkmale und Details, die im Zusammenhang mit dem erfindungsgemäßen Folienprodukt beschrieben sind, selbstverständlich auch im Zusammenhang mit dem erfindungsgemäßen Herstellverfahren und jeweils umgekehrt, so dass bzgl. der Offenbarung zu den einzelnen Erfindungsaspekten stets wechselseitig Bezug genommen wird bzw. werden kann.

Ein erfindungsgemäßes Folienprodukt nach Anspruch 1 weist eine im Wesentlichen fortlaufende Erstreckung mit einer Oberseite, einer Unterseite und zwei seitlich verlaufenden Rändern auf. Ein erfindungsgemäßes Folienprodukt zeichnet sich dadurch aus, dass an jedem der beiden Ränder ein fortlaufender Randabschnitt aus einem ersten Material und zwischen den Randabschnitten ein fortlaufender Hauptabschnitt aus einem zweiten Material angeordnet ist. Dabei weist das erste Material eine höhere Oberflächenhaftung als das zweite Material auf.

In erfindungsgemäßer Weise ist unter einer fortlaufenden Erstreckung vorzugsweise ein Folienprodukt zu verstehen, welches in einem kontinuierlichen oder semikontinuierlichen Verfahren hergestellt wird bzw. wurde. Die fortlaufende Erstreckung bedeutet also, dass zwar ein Endabschnitt vorliegt, von diesem ausgehend das Folienprodukt sich jedoch im Wesentlichen zwischen den zwei seitlich verlaufenden Rändern erstreckt. Die Ränder, wie auch die Oberseite und die Unterseite stellen dabei die Begrenzungsflächen des Folienproduktes dar.

Die Randabschnitte bzw. der Hauptabschnitt sind vorzugsweise jeweils ein Volumenabschnitt des Folienproduktes. Die Randabschnitte und der Hauptabschnitt stoßen dabei vorzugsweise aneinander, so dass die Summe aus den beiden Randabschnitten und dem Hauptabschnitt gemeinsam das Gesamtvolumen des Folienproduktes ausbilden.

Im Rahmen der vorliegenden Erfindung ist unter einer höheren Oberflächenhaftung für das erste Material mit Bezug auf das zweite Material insbesondere ein Parameter zu verstehen, welcher hinsichtlich einer Verwendung dieses Folienproduktes in einem Reckverfahren ausgelegt werden soll. Die Oberflächenhaftung ist also insbesondere im Verlauf dieses Reckverfahrens für das erste Material größer als für das zweite Material. Auch ist diese Oberflächenhaftung vorzugsweise auf die Haftung dieses ersten Materials bzw. des zweiten Materials auf einem entsprechenden Walzenpaar einer Reckvorrichtung bezogen. Auch die Umgebungsparameter eines solchen Reckverfahrens, insbesondere die Temperatur während der Durchführung des Reckverfahrens, sind bei der Definition der höheren Oberflächenhaftung der beiden Materialien im Sinne der vorliegenden Erfindung vorzugsweise heranzuziehen.

Durch die erfindungsgemäße Ausbildung ist es möglich, dass dieses Folienprodukt in einem Reckverfahren eingesetzt wird, ohne dass ein Halten der Ränder bzw. der Randabschnitte erfolgen muss. Die beiden Randabschnitte haften von selbst durch die höhere Oberflächenhaftung stärker bzw. vollständig an entsprechenden Walzenpaaren einer Reckvorrichtung. Damit wird sozusagen ein automatisches Haften zur Verfügung gestellt, durch welches ein Neck-In, also die Einschnürung quer zur Reckrichtung, reduziert werden kann bzw. vollständig vermieden wird. Die beiden Materialien können sich dabei durch ihr Grundkonzept unterscheiden, insbesondere unterschiedliche Materialien wie z. B. Polyethylen (PE) oder Polypropylen (PP) sein. Auch ist es möglich, dass die Materialen sich nur hinsichtlich einzelner Parameter, insbesondere hinsichtlich ihrer Oberflächenbeschaffenheit und/oder hinsichtlich ihrer Schmelztemperatur, unterscheiden.

Besonders vorteilhaft ist es, wenn bei einem erfindungsgemäßen Folienprodukt die Ausprägung der Oberflächenhaftung durch unterschiedliche Schmelztemperaturen der beiden Materialien zur Verfügung gestellt wird. Dabei wird die Schmelztemperatur des ersten Materials so eingestellt, dass bei der Temperaturerhöhung während eines Reckverfahrens ein Anschmelzen, zumindest der Oberfläche der Randabschnitte erfolgt. Damit erhöht sich die Oberflächenhaftung dieses ersten Materials für die Randabschnitte deutlich, so dass ein entsprechendes Anhaften an den zugehörigen Walzenabschnitten die Folge ist. Dieses teilweise Verkleben an den Walzen führt dazu, dass ein Halten des Folienproduktes an den Randabschnitten gegen eine Reduktion der Breite des Folienproduktes, also gegen das sogenannte Neck-In, erfolgt.

Selbstverständlich kann dieser Randabschnitt so ausgebildet sein, dass er anschließend Teil des weiter zu verwendenden Folienproduktes ist. Jedoch ist es auch möglich, dass dieser Randabschnitt anschließend abgeschnitten wird, sodass im Wesentlichen ausschließlich der Hauptabschnitt das gewünschte hergestellte und längsgereckte finale Folienprodukt darstellt.

Ein erfindungsgemäßes Folienprodukt kann dahingehend weitergebildet sein, dass auf den Flächen der Oberseite und der Unterseite, welche an die Ränder angrenzen, die Randabschnitte ausgebildet sind. Mit anderen Worten reicht es aus, wenn die Randabschnitte in Form des ersten Materials im Wesentlichen ausschließlich als äußerste Schicht des Folienproduktes in diesem Randabschnitt ausgebildet sind. So kann eine Fertigung z. B. durch Beschichtung dieser Randabschnitte mit dem ersten Material erfolgen. Dabei ist es vorteilhaft, wenn eine Verbindung zwischen den beiden Materialien hergestellt wird. Diese kann durch Materialschluss und/oder durch Kraftschluss und/oder durch Formschluss zur Verfügung gestellt werden. Bei der Ausführungsform, bei welcher in Form einer Beschichtung die Randabschnitte zur Verfügung gestellt werden, kann insbesondere ein Aufkleben dieser Schichten erfolgen. Damit kann mit besonders geringem Materialaufwand und schneller Fertigung ein erfindungsgemäßes Folienprodukt hergestellt werden.

Ebenfalls von Vorteil kann es sein, wenn bei einem erfindungsgemäßen Folienprodukt das erste Material der Randabschnitte sich vollständig oder im Wesentlichen vollständig zwischen der Oberseite und der Unterseite erstreckt. Damit kann eine besonders einfache Fertigung mit einer Koextrusionsmaschine hergestellt werden. In der Koextrusion wird das erste und das zweite Material extrudiert und in Kontakt miteinander gebracht. Aufgrund der Tatsache, dass die beiden Materialien in flüssigem Zustand miteinander in Kontakt gebracht werden, kann insbesondere bei einem stumpfen Stoß eine materialschlüssige Verbindung zwischen den beiden Materialen und damit zwischen den Randabschnitten und dem Hauptabschnitt hergestellt werden. Dies ist besonders kostengünstig hinsichtlich der Herstellung. Die materialschlüssige Verbindung ist insbesondere bei einem stumpfen Stoß zwischen den Randabschnitten und dem Hauptabschnitt hinsichtlich der mechanischen Belastbarkeit während des Reckprozesses von großem Vorteil.

Ebenfalls von Vorteil kann es sein, wenn bei einem erfindungsgemäßen Folienprodukt die Randabschnitte und der Hauptabschnitt zwischen der Oberseite und der Unterseite zumindest abschnittsweise überlappen. Auf diese Weise wird die Stoßfläche zwischen den Randabschnitten und dem Hauptabschnitt vergrößert, so dass z. B. bei klebetechnischer Verbindung an der Stoßfläche eine vergrößerte Klebefläche zur Verfügung gestellt wird. Auch ein teilweises oder vollständiges Umgreifen des Randabschnittes an die entsprechend überlappende Stelle des Hauptabschnitts ist im Sinne der vorliegenden Erfindung möglich. So kann auch eine formschlüssige Fixierung des Randabschnitts am Hauptabschnitt zur Verfügung gestellt werden. Insbesondere bei Materialpaarungen, welchen keinen Materialschluss miteinander ausbilden können bzw. grundsätzlich schwer miteinander verbindbar sind kann eine derartige überlappende Ausführungsform Vorteile mit sich bringen.

Ein weiterer Vorteil wird dadurch erzielt, dass bei einem erfindungsgemäßen Folienprodukt am Stoß zwischen dem ersten Material der Randabschnitte und dem zweiten Material des Hauptabschnitts wenigstens abschnittsweise eine Haftvermittlungsschicht angeordnet ist. Diese kann insbesondere eine Klebstoffschicht sein. Auf diese Weise können auch Materialien miteinander verbunden werden, welche nicht durch Aufschmelzen einen Materialschluss miteinander eingehen können. Damit kann unabhängig vom Material des Hauptabschnittes des Folienproduktes immer das gleiche Material für den Randabschnitt verwendet werden, da auf die Kompatibilität der beiden Materialien kaum oder nur wenig Rücksicht genommen werden muss. Dies erhöhte die Universalität eines erfindungsgemäßen Folienproduktes.

Ein weiterer Vorteil kann dann erzielt werden, wenn bei einem erfindungsgemäßen Folienprodukt die Randabschnitte und der Hauptabschnitt durch gemeinsame Koextrusion hergestellt werden. Dies ist eine besonders kostengünstige Herstellmethode, da der Hauptabschnitt häufig durch ein Extrusionsverfahren zur Verfügung gestellt wird. So kann beispielsweise über eine Flachdüse und vorgeschaltete zwei bzw. drei Extruder eine entsprechende Materialmischung zugeführt werden, welche aus der Düse ausgebracht wird und beim Aushärten zum Folienprodukt gemäß der vorliegenden Erfindung wird. Die Koextrusion kann insbesondere hinsichtlich unterschiedlichen Materialeinsatzes besonders kostengünstig und einfach eingesetzt werden. Auch die Komplexität der Herstellung wird auf diese Weise deutlich reduziert.

Ebenfalls von Vorteil ist es, dass sich bei einem erfindungsgemäßen Folienprodukt das erste Material sich von dem zweiten Material hinsichtlich der Oberflächenhaftung unter den Umgebungsbedingungen des Längsreckverfahrens unterscheidet. Dies gilt mit Bezug auf wenigstens eine der folgenden Eigenschaften:
- Schmelztemperatur,
- Oberflächentemperatur,
- Oberflächenrauhigkeit,
- Chemische Oberflächeneigenschaften.

Hinsichtlich der Oberflächenhaftung ist also bei dieser Ausführungsform ein Bezug zu setzen zu den Umgebungsbedingungen des Längsreckverfahrens. Diese Umgebungsbedingungen sind insbesondere die Kraft- und Druckverhältnisse, hauptsächlich jedoch die Temperaturverhältnisse während eines Längsreckverfahrens. Dementsprechend ist auch insbesondere die Schmelztemperatur ein grundsätzliches und wichtiges Unterscheidungsmerkmal, welches für die Oberflächenhaftungsunterscheidung der beiden Materialien verwendet werden kann. Eine reduzierte Schmelztemperatur des ersten Materials führt dementsprechend zu einer vergrößerten Oberflächenhaftung unter den Umgebungsbedingungen eines Längsreckverfahrens. Die entsprechende Temperatur bei einem solchen Längsreckverfahren kann je nach Materialeinsatz zwischen ca. 80°C und ca. 150°C betragen. Auch die Oberflächenstruktur kann angepasst bzw. die Rauigkeit verändert sein. Die Ränder sind dabei z. B. mit besonders glatten Oberflächen versehen, um die Haftung durch großen Oberflächenkontakt zu verbessern. Auch die chemischen Oberflächeneigenschaften können angepasst sein, um entsprechende haftvermittelnde Eigenschaften auszubilden. Dabei sind insbesondere Wasserstoff-Brücken-Bindungen bzw. van-der-Waals-Kräfte zu nennen, um die Oberflächenhaftung zu erhöhen.

Ebenfalls Gegenstand der vorliegenden Erfindung ist ein Verfahren für die Herstellung eines Folienproduktes nach Anspruch 7, mit einer im Wesentlichen fortlaufenden Erstreckung mit einer Oberseite, einer Unterseite und zwei seitlich verlaufenden Rändern. Ein erfindungsgemäßes Verfahren dieser Art zeichnet sich dadurch aus, dass an jedem der beiden Ränder ein fortlaufender Randabschnitt aus einem ersten Material und zwischen den Randabschnitten ein fortlaufender Hauptabschnitt aus einem zweiten Material erzeugt wird. Dabei weist das erste Material eine höhere Oberflächenhaftung als das zweite Material auf. Bei einem erfindungsgemäßen Verfahren ist ein Folienprodukt vorzugsweise mit den Merkmalen gemäß der vorliegenden Erfindung das Herstellungsergebnis. Ein erfindungsgemäßes Herstellverfahren bringt damit die gleichen Vorteile mit sich, wie sie ausführlich mit Bezug auf ein erfindungsgemäßes Folienprodukt erläutert worden sind. Insbesondere kann ein solches Folienprodukt anschließend in einem Reckverfahren eingesetzt werden, wie es später noch erläutert wird.

Ein erfindungsgemäßes Herstellverfahren kann dahingehend weitergebildet sein, dass die Randabschnitte durch Koextrusion gemeinsam oder im Wesentlichen gemeinsam mit dem Hauptabschnitt hergestellt werden. Dies ist eine besondere kostengünstige und einfache Ausgestaltungsform des Verfahrens, da dieselbe Verfahrensweise für die Ausbildung der Randabschnitte und des Hauptabschnitts gemeinsam eingesetzt werden kann. Aufgrund der Tatsache, dass bei der Koextrusion die beiden Materialen gleichzeitig und in flüssigem Zustand miteinander in Kontakt gebracht werden, kann insbesondere ein Materialschluss zwischen den beiden Materialien des jeweiligen Randabschnittes und des angrenzenden Hauptabschnittes bei der Herstellung erzeugt werden.

Ebenfalls offenbart sei ein Verfahren für das Recken eines Folienproduktes, aufweisend eine im Wesentlichen fortlaufende Erstreckung mit einer Oberseite, einer Unterseite und zwei seitlich verlaufenden Rändern. Ein solches Reckverfahren zeichnet sich dadurch aus, dass an jedem der beiden Ränder ein fortlaufender Randabschnitt aus einem ersten Material und zwischen den Randabschnitten ein fortlaufender Hauptabschnitt aus einem zweiten Material angeordnet ist. Dabei weist das erste Material eine höhere Oberflächenhaftung als das zweite Material auf. Weiter wird das Folienprodukt bei diesem Reckverfahren zwischen einem ersten Walzenpaar und einem zweiten Walzenpaar längsgereckt. Dabei haften die Randabschnitte durch die höhere Oberflächenhaftung an den beiden Walzenpaaren, um eine Einschnürung des Folienproduktes quer zur Reckrichtung zu reduzieren. Ein solches Verfahren ist vorzugsweise derart weitergebildet, dass das Folienprodukt gemäß der vorliegenden Erfindung ausgebildet ist. Auf diese Weise bringt ein derartiges Reckverfahren die gleichen Vorteile mit sich, wie sie ausführlich mit Bezug auf ein erfindungsgemäßes Folienprodukt erläutert worden sind.

Ein derartiges Reckverfahren kann dahingehend weitergebildet sein, dass nach dem Längsrecken die Randabschnitte abgeschnitten werden. Vorzugsweise werden die abgeschnittenen Randabschnitte dem Recycling derart zugeführt, dass sie wieder in die Extrusionsmaschine eingebracht werden können, um die Randabschnitte eines weiteren Folienproduktes zur Verfügung zu stellen. Somit kann ein im Wesentlichen geschlossener Kreislauf für das Material der Randabschnitte zur Verfügung gestellt werden, so dass hinsichtlich Materialaufwand und Kosten sowie dem entstehenden Abfall eine weitere Optimierung erfolgen kann.

Die vorliegende Erfindung wird näher erläutert anhand der beigefügten Zeichnungsfiguren. Die dabei verwendeten Begrifflichkeiten "links", "rechts", "oben" und "unten" beziehen sich auf eine Ausrichtung der Zeichnungsfiguren mit normal lesbaren Bezugszeichen. Es zeigen schematisch:
- Fig. 1: eine erste Ausführungsform eines erfindungsgemäßen Folienproduktes,
- Fig. 2: eine weitere Ausführungsform eines erfindungsgemäßen Folienproduktes,
- Fig. 3: eine weitere Ausführungsform eines erfindungsgemäßen Folienproduktes,
- Fig. 4: eine Ausführungsform eines erfindungsgemäßen Herstellverfahrens und
- Fig. 5: eine Ausführungsform eines Reckverfahrens.

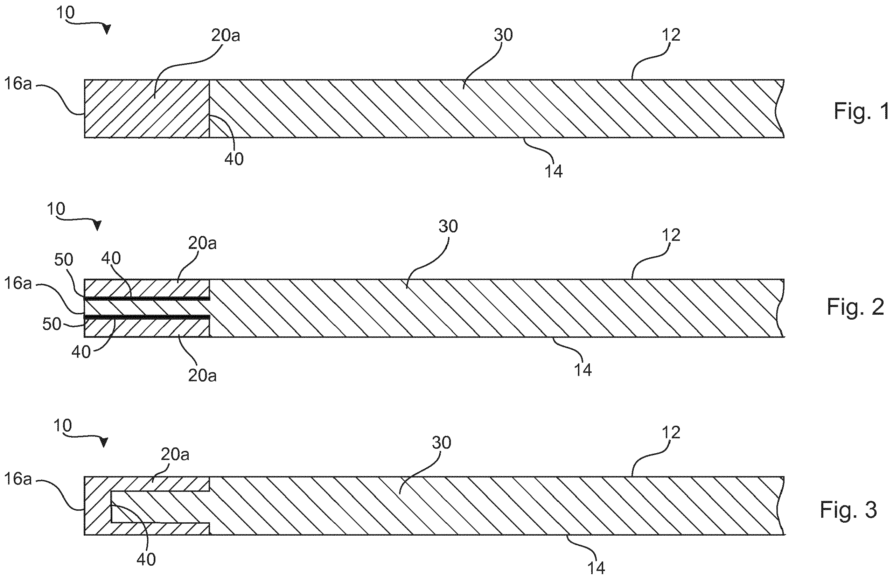

In den Figuren 1 bis 3 sind drei verschiedene Ausführungsformen erfindungsgemäßer Folienprodukte 10 dargestellt.

Figur 1 zeigt die erste Ausführungsform dieses Folienproduktes 10, wobei zwischen der Oberseite 12 und der Unterseite 14 ein Volumen aus zwei verschiedenen Materialien angeordnet ist. Die beiden Materialien lassen sich aufteilen auf ein zweites Material eines Hauptabschnitts 20 und ein erstes Material eines Randabschnitts 20a, welcher dem zugehörigen Rand 16a des Folienproduktes 10 zugeordnet ist. Bei dieser Ausführungsform erstreckt sich das erste Material des Randabschnittes 20a im Wesentlichen vollständig zwischen der Oberseite 12 und der Unterseite 14. Damit entsteht ein stumpfer Stoß 40 zwischen dem ersten Material des Randabschnitts 20a und dem zweiten Material des Hauptabschnittes 30. Diese beiden Materialien sind vorzugsweise in einem Koextrusionsverfahren miteinander in Verbindung gebracht worden, so dass ein Materialschluss als Verbindung zwischen dem Randabschnitt 20a und dem Hauptabschnitt 30 die Folge ist.

Figur 2 zeigt eine weitere Ausführungsform eines erfindungsgemäßen Folienproduktes 10. Bei dieser Ausführungsform sind die Randabschnitte 20a nur auf der Oberseite 12 und der Unterseite 14 an den entsprechenden Flächenabschnitten, welche an den Rand 16a angrenzen, ausgebildet. Sie sind insbesondere in Form einer Beschichtung bzw. eines Auftrages zur Verfügung gestellt, wobei das erste Material der Randabschnitte 20a durch eine Haftvermittlungsschicht 50, insbesondere in Form eines Klebers, mit dem zweiten Material des Hauptabschnittes 30 verbunden ist. Auch besteht hier ein Überlappen des Randabschnittes 20a mit dem Hauptabschnitt 30 in der Links-/Rechtsrichtung gemäß Figur 2. Dieses Überlappen erlaubt es, die Stoßfläche des Stoßes 40 zu vergrößern, sodass dementsprechend auch eine vergrößerte Haftfläche für die Haftvermittlungsschicht 50 zur Verfügung gestellt wird.

In Figur 3 ist eine weitere Ausführungsform eines erfindungsgemäßen Folienproduktes 10 dargestellt. Hier ist eine umgreifende Ausbildung des Randabschnitts 20a dargestellt, sodass zusätzlich auch eine formschlüssige Verbindung zwischen dem Randabschnitt 20a und dem Hauptabschnitt 30 zur Verfügung gestellt werden kann. Auch hier ist wieder ein Überlappen des Randabschnitts 20a und des Randabschnitts 30 die Folge. Die Ausführungsform der Figur 3 kann somit als Kombination der Ausführungsform der Figur 1 und 2 verstanden werden.

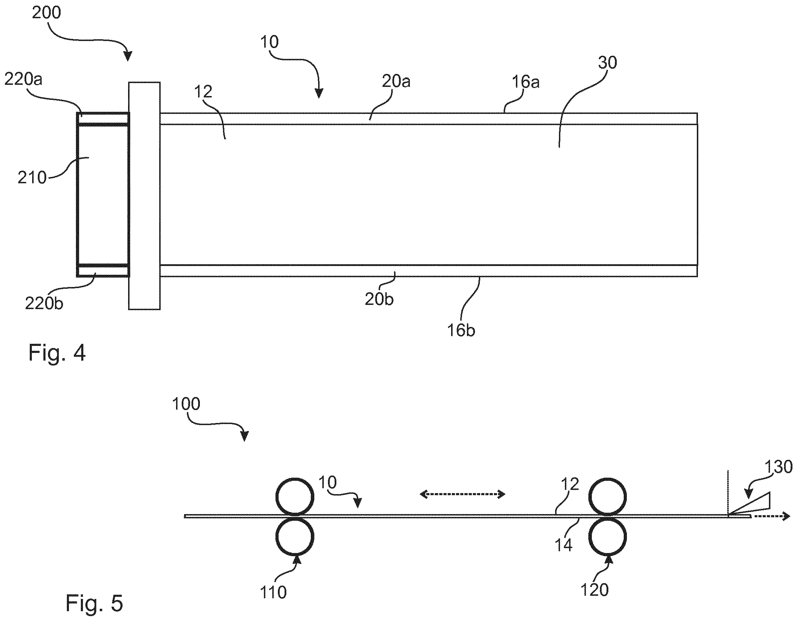

In Figur 4 ist eine Möglichkeit dargestellt, wie ein erfindungsgemäßes Herstellverfahren aussehen kann. So ist eine Extrusionsvorrichtung 200 vorgesehen, welche einen Hauptextruder 210 und zwei Randextruder 220a und 220b aufweist. Auf diese Weise wird ein erfindungsgemäßes Folienprodukt 10 hergestellt. Die beiden Randextruder 220a und 220b extrudieren das erste Material für die Erzeugung der Randabschnitte 20a und 20b, während der Hauptextruder 210 das zweite Material für die Erzeugung des Hauptabschnittes 30 erzeugt. In Figur 4 ist die ganze Extrusionsvorrichtung 200 in der Draufsicht dargestellt, so dass die Oberseite 12 des Folienproduktes 10 zu erkennen ist. Der obere Rand ist in Förderrichtung nach rechts gesehen als linker Rand 16a zu erkennen, während unten in Förderrichtung der rechte Rand 16b als zweiter Abschluss des fortlaufenden Folienproduktes 10 erkennbar ist. In gleicher Weise bilden sich dementsprechend auch fortlaufende Randabschnitte 20a und 20b sowie ein fortlaufender Hauptabschnitt 30 aus.

Figur 5 zeigt eine Variante, wie ein Reckverfahren durchgeführt werden kann. So sind zwei Walzenpaare 110 und 120 hintereinander angeordnet. Durch das erste Walzenpaar 110 wird das Folienprodukt 10 in die Längsreckvorrichtung 100 eingeführt, während durch das zweite Walzenpaar 120 mit höherer Rotationsgeschwindigkeit als das erste Walzenpaar 110 ein Längsrecken, als ein Strecken in Links-/Rechtsrichtung, wie der gestrichelte Pfeil in Figur 5 darstellt, erfolgt. Durch die Ausbildung des Folienproduktes 10 gemäß der vorliegenden Erfindung kann nun eine verbesserte Haftung der Randabschnitte 20a und 20b an den Walzenpaaren 110 und 120 erfolgen, sodass ein Einschnüren bzw. eine Reduktion der Breite des Folienproduktes 10 quer zur Längsrichtung reduziert bzw. vermieden wird. Bei dieser Ausführungsform der Längsreckvorrichtung 100 ist darüber hinaus eine Schneidvorrichtung 130 vorgesehen, welche nach dem Längsrecken die Randabschnitte 20a und 20b abschneidet. Die abgeschnittenen Randabschnitte 20a und 20b können dahingehend recycelt werden, dass sie wieder den Randextrudern 220a und 220b gemäß Figur 4 zugeführt werden und somit als Rohstoffmaterial im Kreislauf geführt werden.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichenliste

- 10: Folienprodukt
- 12: Oberseite
- 14: Unterseite
- 16a: Rand
- 16b: Rand
- 20a: Randabschnitt
- 20b: Randabschnitt
- 30: Hauptabschnitt
- 40: Stoß
- 50: Haftvermittlungsschicht

- 100: Längsreckvorrichtung
- 110: erstes Walzenpaar
- 120: zweites Walzenpaar
- 130: Schneidvorrichtung

- 200: Extrusionsvorrichtung
- 210: Hauptextruder
- 220a: Randextruder
- 220b: Randextruder

## Patentansprüche

1. Folienprodukt (10) aufweisend eine im Wesentlichen fortlaufende Erstreckung mit einer Oberseite (12), einer Unterseite (14) und zwei seitlich verlaufenden Rändern (16a, 16b), wobei
an jedem der beiden Ränder (16a, 16b) ein fortlaufender Randabschnitt (20a, 20b) aus einem ersten Material und zwischen den Randabschnitten (20a, 20b) ein fortlaufender Hauptabschnitt (30) aus einem zweiten Material angeordnet ist, und wobei das erste Material eine höhere Oberflächenhaftung als das zweite Material aufweist,
**dadurch gekennzeichnet,**
**dass** das erste Material sich von dem zweiten Material hinsichtlich der Oberflächenhaftung unter den Umgebungsbedingungen eines Längsreckverfahrens unterscheidet, mit Bezug auf wenigstens eine der folgenden Eigenschaften:
- Schmelztemperatur
- Oberflächenstruktur
- Oberflächenrauhigkeit
- Chemische Oberflächeneigenschaften.

2. Folienprodukt (10) nach Anspruch 1,
**dadurch gekennzeichnet,**
**dass** auf den Flächen der Oberseite (12) und der Unterseite (14), welche an die Ränder (16a, 16b) angrenzen, die Randabschnitte (20a, 20b) ausgebildet sind.

3. Folienprodukt (10) nach einem der vorangegangenen Ansprüche,
**dadurch gekennzeichnet,**
**dass** das erste Material der Randabschnitte (20a, 20b) sich vollständig oder im Wesentlichen vollständig zwischen der Oberseite (12) und der Unterseite (14) erstreckt.

4. Folienprodukt (10) nach einem der vorangegangenen Ansprüche,
**dadurch gekennzeichnet,**
**dass** die Randabschnitte (20a, 20b) und der Hauptabschnitt (30) zwischen der Oberseite (12) und der Unterseite (14) zumindest abschnittsweise überlappen.

5. Folienprodukt (10) nach einem der vorangegangenen Ansprüche,
**dadurch gekennzeichnet,**
**dass** am Stoß (40) zwischen dem ersten Material der Randabschnitte (20a, 20b) und dem zweiten Material des Hauptabschnitts (30) wenigstens abschnittsweise eine Haftvermittlungsschicht (50) angeordnet ist.

6. Folienprodukt (10) nach einem der vorangegangenen Ansprüche,
**dadurch gekennzeichnet,**
**dass** die Randabschnitte (20a, 20b) und der Hauptabschnitt (30) durch gemeinsame Koextrusion hergestellt sind.

7. Verfahren für die Herstellung eines Folienprodukts (10) mit einer im Wesentlichen fortlaufenden Erstreckung mit einer Oberseite (12), einer Unterseite (14) und zwei seitlich verlaufenden Rändern (16a, 16b), wobei
an jedem der beiden Ränder (16a, 16b) ein fortlaufender Randabschnitt (20a, 20b) aus einem ersten Material und zwischen den Randabschnitten (20a, 20b) ein fortlaufender Hauptabschnitt (30) aus einem zweiten Material erzeugt wird, und wobei das erste Material eine höhere Oberflächenhaftung als das zweite Material aufweist,
**dadurch gekennzeichnet,**
**dass** das erste Material sich von dem zweiten Material hinsichtlich der Oberflächenhaftung unter den Umgebungsbedingungen eines Längsreckverfahrens unterscheidet, mit Bezug auf wenigstens eine der folgenden Eigenschaften:
- Schmelztemperatur
- Oberflächenstruktur
- Oberflächenrauhigkeit
- Chemische Oberflächeneigenschaften.

8. Verfahren nach Anspruch 7,
**dadurch gekennzeichnet,**
**dass** damit ein Folienprodukt (10) mit den Merkmalen eines der Ansprüche 1 bis 6 hergestellt wird.

9. Verfahren nach einem der Ansprüche 7 oder 8,
**dadurch gekennzeichnet,**
**dass** die Randabschnitte (20a, 20b) durch Koextrusion gemeinsam oder im Wesentlichen gemeinsam mit dem Hauptabschnitt (30) hergestellt werden.

10. Verfahren nach einem der Ansprüche 7-9
**dadurch gekennzeichnet,**
**dass** das Folienprodukt (10) zwischen einem ersten Walzenpaar (110) und einem zweiten Walzenpaar (120) längsgereckt wird, wobei die Randabschnitte (20a, 20b) durch die höhere Oberflächenhaftung an den beiden Walzenpaaren (110, 120) haften, um eine Einschnürung des Folienproduktes (10) quer zur Reckrichtung zu reduzieren.

11. Verfahren nach Anspruch 10,
**dadurch gekennzeichnet,**
**dass** das Folienprodukt (10) die Merkmale eines der Ansprüche 1 bis 6 aufweist.

12. Verfahren nach Anspruch 10 oder 11,
**dadurch gekennzeichnet,**
**dass** nach dem Längsrecken die Randabschnitte (20a, 20b) abgeschnitten werden.

## Claims

1. A film product (10) having a substantially continuous extension with an upper side (12), a lower side (14) and two laterally extending edges (16a, 16b), wherein
a continuous edge portion (20a, 20b) made from a first material is arranged on each of the two edges (16a, 16b) and a continuous main portion (30) made from a second material is arranged between the edge portions (20a, 20b), and wherein the first material has a higher surface adhesion than the second material,
**characterized in**
**that** the first material differs from the second material with respect to the surface adhesion under the environmental conditions of a longitudinal stretching process, in respect to at least one of the following properties:
- melting temperature
- surface structure
- surface roughness
- chemical surface properties.

2. The film product (10) according to Claim 1,
**characterized in**
that), the edge portions (20a, 20b) are formed on the surface areas of the upper side (12) and the lower side (14), which are adjacent to the edges (16a, 16b).

3. The film product (10) according to any one of the preceding claims,
**characterized in**
**that** the first material of the edge portions (20a, 20b) extends completely or substantially completely between the upper side (12) and the lower side (14).

4. The film product (10) according to any one of the preceding claims,
**characterized in**
**that** the edge portions (20a, 20b) and the main portion (30) overlap at least in sections between the upper side (12) and the lower side (14).

5. The film product (10) according to any one of the preceding claims,
**characterized in**
**that** at least in sections an adhesion-promoting layer (50) is arranged at the joint (40) between the first material of the edge portions (20a, 20b) and the second material of the main portion (30).

6. The film product (10) according to any one of the preceding claims,
**characterized in**
**that** the edge portions (20a, 20b) and the main portion (30) are produced through joint co-extrusion.

7. A method for the production of a film product (10) with a substantially continuous extension with an upper side (12), a lower side (14) and two laterally extending edges (16a, 16b), wherein
a continuous edge portion (20a, 20b) made of a first material is generated on each of the two edges (16a, 16b) and a continuous main portion (30) made from a second material is generated between the edge portions (20a, 20b), and wherein the first material has a higher surface adhesion than the second material,
**characterized in**
**that** the first material differs from the second material with respect to the surface adhesion under environmental conditions of a longitudinal stretching process, in respect to at least one of the following properties:
- melting temperature
- surface structure
- surface roughness
- chemical surface properties.

8. The method according to Claim 7,
**characterized in**
**that** a film product (10) with the features of any one of Claims 1 to 6 is thus produced.

9. The method according to any one of Claims 7 or 8,
**characterized in**
**that** the edge portions (20a, 20b) are produced by co-extrusion together or substantially together with the main portion (30).

10. The method according to any one of Claims 7-9,
**characterized in**
**that** the film product (10) is stretched longitudinally between a first pair of rollers (110) and a second pair of rollers (120), wherein the edge portions (20a, 20b) adhere due to the higher surface adhesion to the two pairs of rollers, in order to reduce a constriction of the film product (10) transversely to the stretching direction.

11. The method according to Claim 10,
**characterized in**
**that** the film product (10) has the features of any one of Claims 1 to 6.

12. The method according to Claim 10 or 11,
**characterized in**
**that** after the longitudinal stretching the edge portions (20a, 20b) are cut off.

## Revendications

1. Produit sous forme de film (10), présentant une étendue essentiellement continue avec une face supérieure (12), une face inférieure (14) et deux bords (16a, 16b) placés latéralement, dans lequel
un tronçon de bord (20a, 20b) continu composé d'une première matière est disposé sur chacun des deux bords (16a, 16b), et un tronçon principal (30) continu composé d'une deuxième matière est disposé entre les tronçons de bord (20a, 20b), et dans lequel
la première matière présente une adhérence de surface plus grande que la deuxième matière,
**caractérisé en ce que**
la première matière se distingue de la deuxième matière pour ce qui est de l'adhérence de surface dans les conditions ambiantes d'un procédé d'étirage longitudinal, en ce qui concerne au moins une des caractéristiques suivantes :
- température de fusion
- structure de surface
- rugosité de surface
- caractéristiques de surface chimiques.

2. Produit sous forme de film (10) selon la revendication 1,
**caractérisé en ce que**
les tronçons de bord (20a, 20b) sont constitués sur les surfaces de la face supérieure (12) et de la face inférieure (14) qui jouxtent les bords (16a, 16b).

3. Produit sous forme de film (10) selon l'une des revendications précédentes,
**caractérisé en ce que**
la première matière des tronçons de bord (20a, 20b) s'étend complètement ou essentiellement complètement entre la face supérieure (12) et la face inférieure (14).

4. Produit sous forme de film (10) selon l'une des revendications précédentes,
**caractérisé en ce que**
les tronçons de bord (20a, 20b) et le tronçon principal (30) se chevauchent au moins par tronçons entre la face supérieure (12) et la face inférieure (14).

5. Produit sous forme de film (10) selon l'une des revendications précédentes,
**caractérisé en ce**
**qu'**une couche de promoteur d'adhérence (50) est disposée au moins par tronçons sur la jointure (40) entre la première matière des tronçons de bord (20a, 20b) et la deuxième matière du tronçon principal (30).

6. Produit sous forme de film (10) selon l'une des revendications précédentes,
**caractérisé en ce que**
les tronçons de bord (20a, 20b) et le tronçon principal (30) sont fabriqués par co-extrusion conjointe.

7. Procédé de fabrication d'un produit sous forme de film (10) avec une étendue essentiellement continue avec une face supérieure (12), une face inférieure (14) et deux bords (16a, 16b) placés latéralement, dans lequel
un tronçon de bord (20a, 20b) continu composé d'une première matière est disposé sur chacun des deux bords (16a, 16b), et un tronçon principal (30) continu composé d'une deuxième matière est disposé entre les tronçons de bord (20a, 20b), et dans lequel
la première matière présente une adhérence de surface plus élevée que la deuxième matière,
**caractérisé en ce que**
la première matière se distingue de la deuxième matière pour ce qui est de l'adhérence de surface dans les conditions ambiantes d'un procédé d'étirage longitudinal, en ce qui concerne au moins une des caractéristiques suivantes :
- température de fusion
- structure de surface
- rugosité de surface
- caractéristiques de surface chimiques.

8. Procédé selon la revendication 7,
**caractérisé en ce**
**qu'**un produit sous forme de film (10) ayant les caractéristiques d'une des revendications 1 à 6 est ainsi fabriqué.

9. Procédé selon l'une des revendications 7 ou 8,
**caractérisé en ce que**
les tronçons de bord (20a, 20b) sont fabriqués par co-extrusion conjointement ou essentiellement conjointement avec le tronçon principal (30).

10. Procédé selon l'une des revendications 7 à 9,
**caractérisé en ce que**
le produit sous forme de film (10) est étiré longitudinalement entre une première paire de cylindres (110) et une deuxième paire de cylindres (120), dans lequel les tronçons de bord (20a, 20b) adhèrent sur les deux paires de cylindre (110, 120) sous l'action de l'adhérence de surface plus élevée afin de réduire un rétrécissement du produit sous forme de film (10) transversalement à la direction d'étirage.

11. Procédé selon la revendication 10,
**caractérisé en ce que**
le produit sous forme de film (10) présente les caractéristiques de l'une des revendications 1 à 6.

12. Procédé selon la revendication 10 ou 11,
**caractérisé en ce que**
les tronçons de bord (20a, 20b) sont découpés après l'étirage longitudinal.
